# EUROPEAN PATENT SPECIFICATION

(11) **EP 0 694 919 B1**
(45) Date of publication and mention of the grant of the patent: **24.06.1998**
(21) Application number: 95116250.2
(22) Date of filing: 04.03.1992
(51) Int. Cl.: G11B 23/03, G11B 23/033

(54) **Disc cartridge**
Plattenkassette
Cassette de disque

(30) Priority: 05.03.1991 JP 62477/91; 22.03.1991 JP 83386/91
(43) Date of publication of application: 31.01.1996
(62) Divisional of application: 92301827.9
(73) Proprietor: SONY CORPORATION, Tokyo 141 (JP)
(72) Inventor: Fujisawa, Hirotoshi, c/o Patent Division, Shinagawa-ku, Tokyo 141 (JP)
(74) Representative: Purvis, William Michael Cameron

(56) References cited:
- EP-A- 0 266 794
- EP-A- 0 402 037

## Description

The invention relates to a disc cartridge.

Such a disc cartridge can accommodate therein a disc used as a recording medium for information signals, such as an optical disc or a magneto-optical disc.

As a recording medium for information signals, a disc such as a magnetic disc, an optical disc or a magneto-optical disc, has been previously proposed. The disc has a disc-shaped substrate having one major surface coated with a signal recording layer. The inner periphery of the disc, provided with a centreing hole, is designed as a chucking region to be chucked by a disc rotating unit of disc recording and/or reproducing apparatus. A region of the disc extending from the outer edge of the chucking region to the outer periphery is designed as a signal recording region.

To prevent deposition of dust and dirt or pollution by contact with hands or fingers, and for achieving handling ease, the disc is housed in a square-shaped casing-like cartridge main body so as to be constructed as a disc cartridge.

With such a disc cartridge, the disc housed within the cartridge main body is rotatable within the cartridge main body. A chucking aperture to expose the chucking portion of the disc to outside is provided in one of the major surfaces of the disc. A recording/reproducing aperture to expose at least a part of the major surface of the disc to outside between its inner and outer peripheries is also provided in one of the major surfaces of the disc. Information signals may be written on or reproduced from the signal recording layer of the disc accommodated in the cartridge main body via the recording/reproducing aperture whilst the disc has its chucking portion chucked by the disc rotating unit via the chucking aperture on loading the disc cartridge in position within the disc recording and/or reproducing apparatus.

To prevent intrusion of dust and dirt into the cartridge main body so as to protect the disc, the recording/reproducing aperture is closed by a shutter member when the disc cartridge is out of use. The shutter member has a plate portion of a size to close the recording/reproducing aperture. The shutter member may be moved along a lateral side of the cartridge main body by having a proximal part of the plate portion supported by the lateral side of the cartridge main body.

The shutter member may be formed by bending a metallic plate, or by moulding from a synthetic resin.

European Patent Publication No. 0,402,037 discloses a disc cartridge having a cartridge main body, a shutter member and a holding member for holding the shutter member in a position where it closes an aperture in the cartridge main body. The shutter member is opened by a shutter opening member which abuts against and slides along a lateral side of the cartridge main body. The shutter opening member is engageable with a notch in the cartridge main body to hold the shutter member in a position where the aperture is opened.

According to the invention there is provided a disc cartridge comprising:
a cartridge main body accommodating a disc and having an aperture in at least one major surface thereof to expose a portion of a major surface of the disc to outside across an inner periphery and an outer periphery of the disc;
a shutter member movable along a lateral side of the cartridge main body to open or close the aperture, said shutter member being supported by the cartridge main body; and
a holding member having a proximal end supported within the cartridge main body for rotation about the proximal end, the holding member being effective to hold the shutter member in a position of closing the aperture;
characterised by:
a shutter opening groove provided in the lateral side of the cartridge main body in parallel to the inserting direction of the cartridge main body; and
an escape part formed in and extending along a portion of the lateral side of the cartridge main body provided with the shutter opening groove, said escape part being provided to prevent a shutter closing member from abutting with the lateral side of the cartridge main body when the shutter member is moved by the shutter closing member to close the aperture.

The invention is diagrammatically illustrated by way of example in the accompanying drawings, in which:
Figure 1 is a perspective view showing a disc cartridge having accommodated therein a read-only disc and provided with a shutter member of a metallic material, and showing a state in which the shutter member is detached from a cartridge main body;
Figure 2 is a perspective view showing the disc cartridge of Figure 1 with the shutter member attached, as viewed from the upper side;
Figure 3 is a perspective view showing the disc cartridge of Figure 1 with the shutter member attached, as viewed from the lower side;
Figure 4 is a perspective view showing the disc cartridge of Figure 1, as viewed from the lower side, and showing a state in which the shutter member of the disc cartridge of Figure 1 has opened an aperture of the cartridge main body;
Figure 5 is a cross-sectional view taken on line a-a' in Figure 2, with a portion thereof being broken away;
Figure 6 is a perspective view showing a disc cartridge having accommodated therein a disc for recording and/or reproducing information signals and fitted with a shutter member of a metallic material, with the shutter member detached from the cartridge main body;
Figure 7 is a perspective view showing the disc cartridge of Figure 6 with the shutter member attached, from the upper side;
Figure 8 is a perspective view showing the construction of the disc cartridge of Figure 6 with the shutter member attached, from the lower side;
Figure 9 is a perspective view showing the disc cartridge shown in Figure 6 from the lower side, with the shutter member in a position in which it opens the aperture in the cartridge main body;
Figure 10 is a cross-sectional view taken on line b-b' in Figure 6, with a portion broken away;
Figure 11 is a perspective view showing a disc cartridge having accommodated therein a read-only disc and fitted with a shutter member of a metallic material, with the shutter member detached from the cartridge main body;
Figure 12 is a perspective view showing the disc cartridge of Figure 11 with the shutter member attached, from the upper side;
Figure 13 is a perspective view showing the disc cartridge of Figure 11 with the shutter member attached, from the lower side;
Figure 14 is a perspective view showing the disc cartridge shown in Figure 11 from the lower side. with the shutter member in a position in which it opens the aperture in the cartridge main body;
Figure 15 is a perspective view showing a disc cartridge having accommodated therein a disc for recording and/or reproducing information signals and fitted with a shutter member of a synthetic resin, with the shutter member detached from the cartridge main body;
Figure 16 is a perspective view showing the disc cartridge of Figure 15 with the shutter member attached, from the upper side;
Figure 17 is a perspective view showing the disc cartridge of Figure 15 with the shutter member attached, from the lower side;
Figure 18 is a perspective view showing the disc cartridge shown in Figure 11 from the lower side, with the shutter member in a position in which it opens the aperture in the cartridge main body.

Referring to the drawings, preferred embodiments of the invention will be explained in detail and a first embodiment is applied to a disc cartridge in which a read-only disc is accommodated in a cartridge main body.

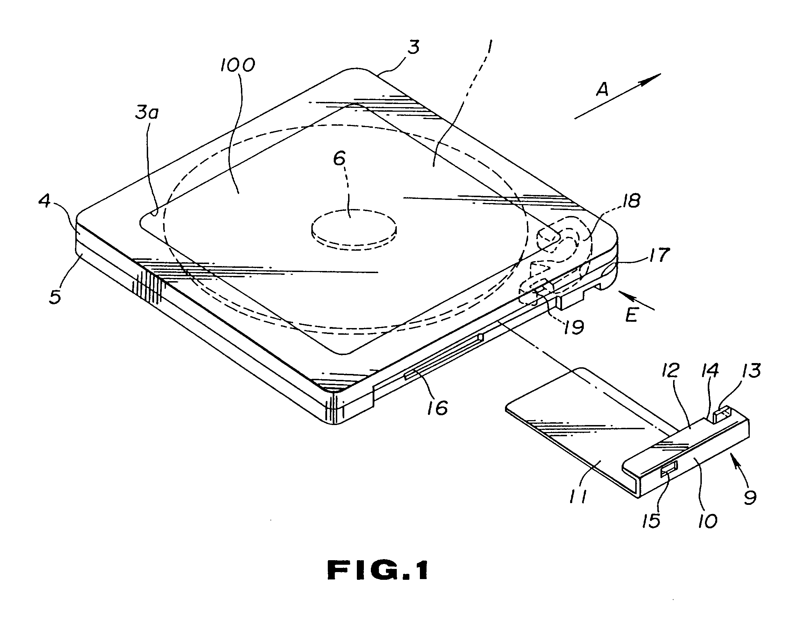

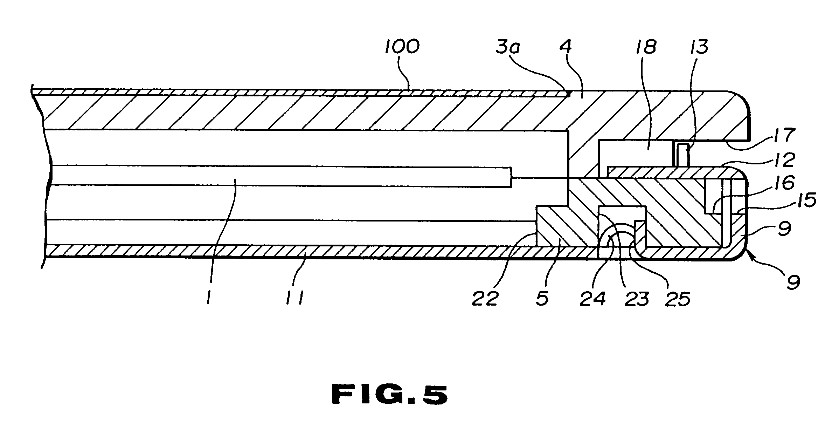

Referring to Figures 1 to 5, a disc cartridge comprises a cartridge main body 3, accommodating a read-only disc 1, and a shutter member 9 as later described. The read-only disc 1 include a disc substrate of a light-transmitting synthetic resin having one major surface to be irradiated by a light beam as a signal reading surface. Information signals are recorded as pits on the opposite major surface of the disc substrate and a signal recording layer of a metal material, such as aluminium, is applied over the pits. With the read-only disc 1, the information signals may be read by irradiating the signal recording layer with a light beam from the signal reading surface through the disc substrate. The read-only disc 1 has a diameter of about 64 mm. A centre hole 7 and a disc hub 6, by means of which disc reproducing apparatus for reading the information signals from the signal reading surface can hold the read-only disc 1, are provided at a central portion of the disc 1. A signal recording region is provided to extend from the outer perimeter of the centre hole 7 on the major surface as far as the outer rim of the disc substrate of the read-only disc 1. The read-only disc need not be a disc on which the information signals are recorded in the form of pits, it could be a recordable disc or a disc on which information signals are pre-recorded and cannot be re-recorded.

The centre hole 7 is a circular through-hole extending from one to the opposite major surfaces of the disc substrate and has its centre coincident with the centre of curvature of recording track(s) formed spirally or concentrically in the signal recording region. The disc hub 6 is in the form of a disc of a diameter slightly larger than the centre hole 7. The disc hub 6 is attached to the other major surface of the disc substrate of the read-only disc 1 to close the centre hole 7 so that the centre of the centre hole 7 is coincident with the centre of the disc hub 6

The cartridge main body 3 comprises a thin rectangular casing to house the read-only disc 1 therein by abutting and securing an upper half 4 and a lower half 5 to each other. The cartridge main body 3 is substantially in the form of a square in which each side of the upper and lower major surfaces adjacent to the major surfaces of the disc 1 is approximately 68 to 72 mm long which is slightly greater than the disc diameter. The read-only disc 1 is housed within the cartridge main body 3 with the signal reading major surface and the opposite major surface thereof facing the lower half 5 and the upper half 4, respectively.

The lower major surface of the cartridge main body 3 is provided with an aperture 22 for an optical pickup device The aperture 22 for the optical pickup device 22 is a substantially rectangular through-hole extending from near the centre of the lower major surface of the main cartridge body 3 to close to an edge of the lower major surface, that is to close to a lateral side of the cartridge main body 3. The aperture 22 for the optical pickup device can expose to outside a part of the signal recording region of the read-only disc 1 directed towards the lower half 5 between the inner and outer peripheries of the disc. Information signals are read from the read-only disc 1 by the optical pickup device of the disc reproducing apparatus via the aperture 22 for the optical pickup device.

A substantially circular chucking aperture 8 is provided at the centre of the major surface of the lower half 5. The chucking aperture 8 exposes to outside a part of the disc hub 6 and the centre hole 7. The read-only disc 1 is held by a disc table, not shown, of disc reproducing apparatus, which intrudes via the chucking aperture into the cartridge main body 3.

The shutter member 9 is mounted on the cartridge main body 3, as shown in Figures 1 to 5. The shutter member 9 can close the aperture 22 for the optical pickup device. The shutter member 9, having a predetermined uniform thickness of eg 0.3 mm, comprises a connecting web 10, a plate portion 11, and an inserting portion 12, which connecting web 10 and plate portion 11 extend substantially orthogonally with respect to and are supported by the connecting web 10. The shutter is formed as one piece from a sheet of metallic material, such as stainless steel.

The plate portion 11 is in the form of a rectangle slightly larger in size than the aperture 22, that is, it has a longitudinal length of approximately 25 to 30 mm, for optionally closing the aperture 22. The connecting web 10 has a length longer than the width of the plate portion 11. The inserting portion 12 is supported by the lateral side of the plate portion 11 and extends parallel to the plate portion 11. The inserting portion 12 has a length in the direction of the length of the plate portion 11 shorter than the length of the plate portion 11 and approximately 4 mm. The inserting portion 12 has a width in the direction of the plate portion 11 approximately equal to the longitudinal length of the connecting web 10.

The inserting portion 12 is formed with an upright substantially rectangular shutter opening lug 13. The lug 13 has a height above the inserting portion 12 of 1 to 2 mm and a width of about 4 mm. The inserting portion 12 also has a notch 14 extending from the free end of the inserting portion 12 towards the connecting web 10. The notch 14 may be provided laterally of the lug 13 by segmenting the lug 13 from the inserting portion 12.

At the end of the plate portion 11 adjacent the connecting web 10 are formed engaging pawls 25, 25 and engaging projections 24, 24 to be engaged in a supporting groove 23 formed in the vicinity of the lateral side of the lower major surface of the cartridge main body 3. The pawls 25, 25 are formed by segmenting a part of the plate portion 11, whilst the engaging projections 24, 24 are formed by bending a part of the plate portion 11. The supporting groove 23 is provided in the vicinity of and along one lateral side of the lower major surface of the cartridge main body 3.

Said one lateral side of the cartridge main body 3 is provided with a shutter opening groove 17. The shutter opening groove 17 is formed in the edge of said one lateral side of the cartridge main body 3 parallel to the direction of insertion A of the disc cartridge into disc reproducing apparatus and is of a width corresponding to the height of the shutter opening lug 13. The shutter opening groove 17 extends along the disc cartridge inserting direction and is open at the forward side in the inserting direction. The shutter member 9 is supported by engaging distal ends of the pawls 25, 25 in the supporting groove 23 and by introducing the inserting portion 12 into the shutter opening groove 17, so that the connecting web 11 is in contact with said one lateral side of the cartridge main body 3.

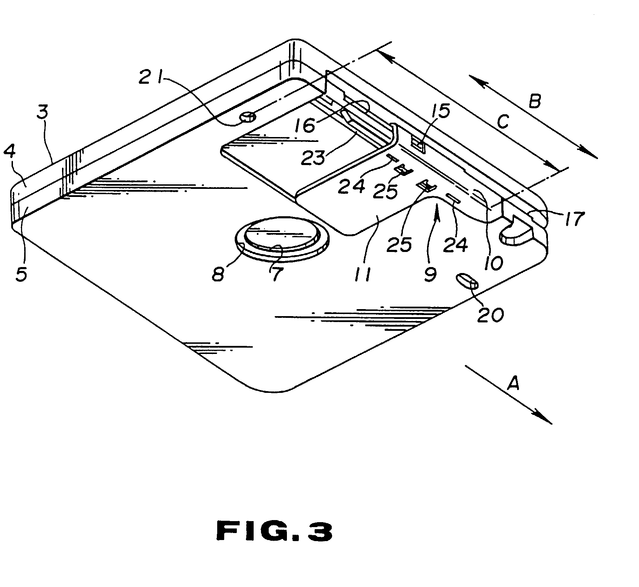

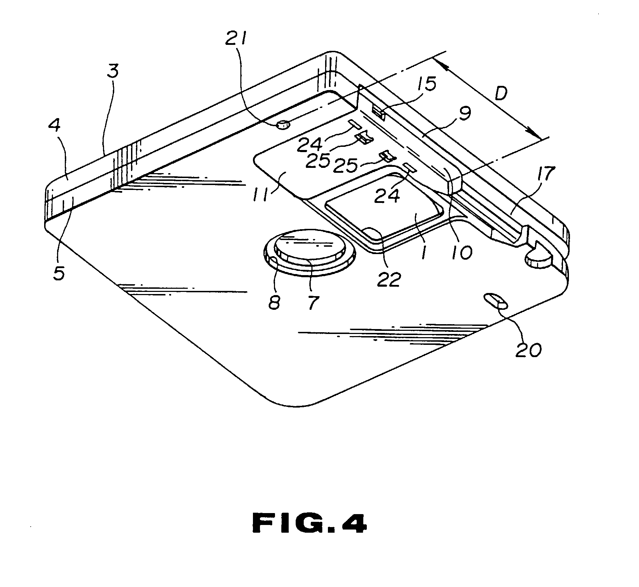

With the engaging pawls 25, 25 and the engaging projections 24, 24 being slidable along the supporting groove 23, the shutter member 9 may be moved along the lateral side of the cartridge main body 3. The shutter member 9 is also supported so that the plate portion 11 is in contact with the lower major surface of the cartridge main body 3. The shutter member 9 may be moved between a position of closing the aperture 22 for the optical pickup device as shown in Figure 3 and a position of opening the aperture 22 for the optical pickup device as shown in Figure 4.

Within the cartridge main body 3, there is provided a locking member 18 for locking the shutter member 9 at the position of closing the aperture 22 for the optical pickup device by the plate portion 11 as shown in Figure 3. The locking member 18 is formed of a flexible resilient material in the form of an arm having one end secured in position within the cartridge main body 3 and a free end projecting into the shutter opening groove 17. A locking section 19 is formed at the free end of the locking member 18 to extend outwardly of the cartridge main body 3.

The locking section 19 of the locking member 18 can engage in the notch 14 of the shutter member 9 when the plate portion 11 of the shutter member 9 is in the position of closing the aperture 22 for the optical pickup device. That is, the locking member 18 locks the shutter member 9 in the position of closing the aperture 22 for the optical pickup device. The locking member 18 is thrust via the shutter opening groove 17 by a thrusting pin, not shown, of the disc reproducing apparatus and thereby deformed elastically towards the interior of the cartridge main body 3, as shown by an arrow E in Figure 1, to disengage the shutter member 9.

A shutter closing through-hole 15 is formed in the connecting web 10. When the shutter member 9 is closed by the disc reproducing apparatus, an engaging pin, not shown, projects into the shutter closing through-hole 15 to displace the shutter member 9 in the closing direction relative to the cartridge main body 3. In the lateral edge wall of the cartridge main body 3 in which the shutter opening groove 17 is formed, a closing pin escape groove 16 is formed to extend along the shutter opening groove 17. The function of the closing pin escape groove 16 is to prevent the engaging pin of the disc reproducing apparatus from abutting against the lateral side of the cartridge main body 3 when the engaging pin is introduced into the shutter closing through-hole 15.

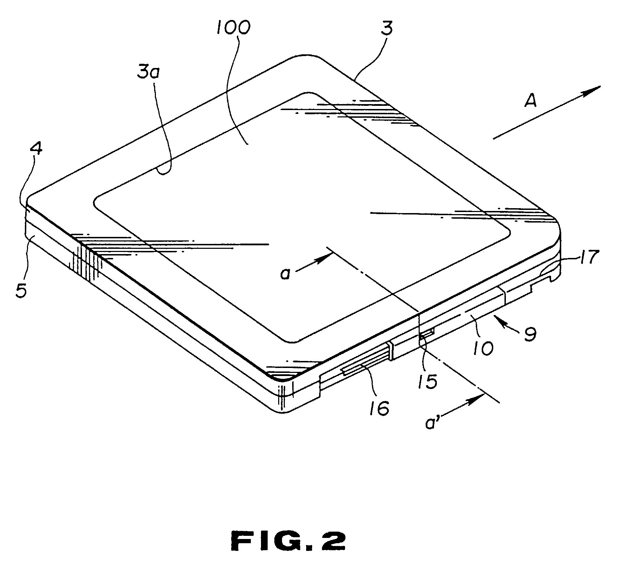

With the above described disc cartridge, the aperture 22 for the optical pickup device is closed by the plate portion 11 of the shutter member, as shown in Figures 2 and 3, when the disc cartridge is not in use, to prevent dust and dirt or fingers from intruding into the cartridge main body 3 via the aperture 22 for the optical pickup device.

When the disc cartridge is in use, the disc cartridge is loaded in position in a cartridge loading section within the disc reproducing apparatus. The cartridge main body 3 is loaded in position in the cartridge loading section by a plurality of positioning pins provided on the chassis being introduced into first and second positioning holes 21, 20 provided in the lower major surface of the cartridge main body 3. Also, a thrust pin (or any other shutter opening member) of the disc reproducing apparatus intrudes into the shutter opening groove 17 and the locking member 18 is resiliently deformed so as to be rotated towards the inner space of the cartridge main body 3 to disengage the locking member 18 from the shutter member 9. The shutter opening lug 13 is thrust by a thrust pin for displacing the shutter member 9 from the closing position shown in Figure 3 towards the opening position shown in Figure 4 to open the aperture 22 for the optical pickup device. At this time, information signals may be read from the read-only disc 1 via the aperture 22 for the optical pickup device.

When the aperture 22 for the optical pickup device is closed by the plate portion 11 of the shutter member 9, the distance between the shutter opening lug 13 and the first positioning hole 21 is a first distance indicated by an arrow C in Figure 3. When the aperture 22 for the optical pickup device is opened by the plate portion 11 of the shutter member 9, the distance between the shutter opening lug 13 and the first positioning hole 21 is a second distance indicated by an arrow D in Figure 4.

Since the shutter member 9 is slid by the thrust pin intruded into the shutter opening groove 17, the shutter member 9, when modified into a shape suited to be moulded integrally from a synthetic resin material, may be used in a disc reproducing apparatus designed to be used in conjunction with a disc cartridge having the shutter member 9 formed of a metallic material.

The read-only disc 1 is set on the disc table of the disc reproducing apparatus. The disc table is rotatable and smaller in diameter than the chucking aperture 8 and larger in diameter than the centre hole 7. When the cartridge main body 3 is loaded into a cartridge loading section of the disc reproducing apparatus, the disc table is introduced into the cartridge main body 3 via the chucking aperture 8. When the disc table intrudes into the cartridge main body 3, the read-only disc 1 is held with the major surface region around the centre hole 7 set on the upper surface of the disc table.

Meanwhile, the disc table has a substantially conical centreing projection on its major surface, this centreing projection being inserted into the centre hole 7 of the read-only disc 1 to centre the read-only disc 1. A permanent magnet, not shown, is enclosed in the centreing projection magnetically to attract the disc hub 6. The read-only disc 1 is positioned in a predetermined manner relative to the disc table by the upper surface of the disc table and the centreing projection. The information signals are read from the read-only disc 1 by the optical pickup device of the disc reproducing apparatus.

The shutter member 9 is not in contact with the upper major surface of the cartridge main body 3. Thus the upper major surface of the cartridge main body 3 in its entirety may be utilised for inscription, printing or affixture of a label 100 indicating the contents of the information signals recorded on the read-only disc 1.

The upper major surface of the cartridge main body 3 is recessed at 3a so that, on affixing the label 100, the upper surface of the label is flush with the upper major surface of the cartridge main body 3.

Since it suffices for the present disc cartridge to be provided with only one plate section associated with the aperture 22 for the optical pickup device, the disc cartridge may be reduced in size so that the cartridge main body 3 itself may be reduced in size.

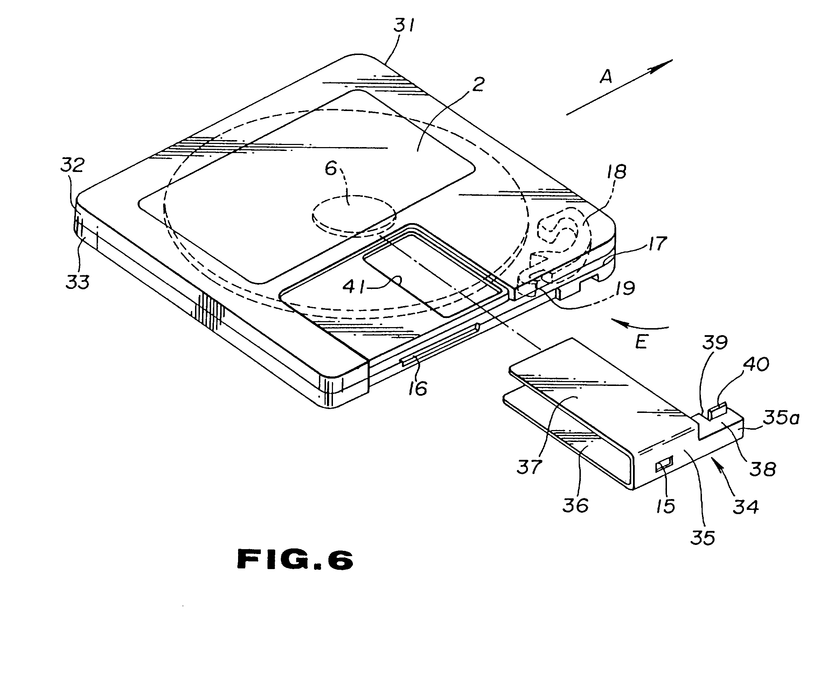

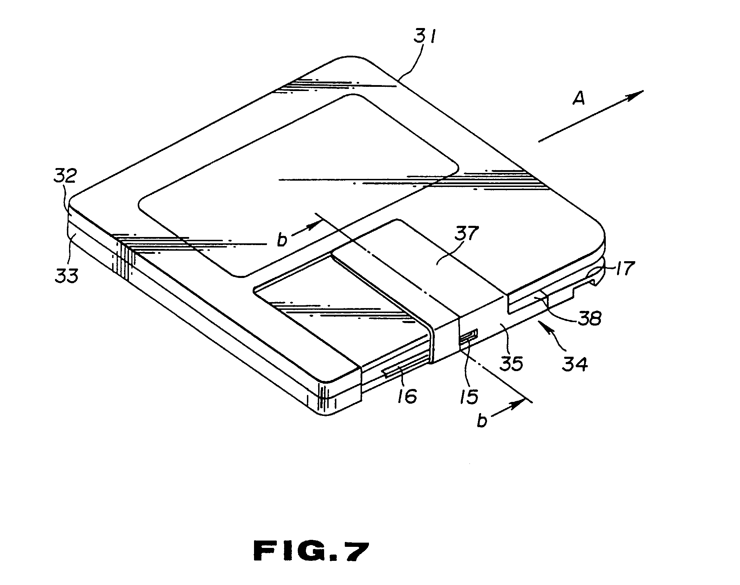

The embodiment of Figures 6 to 10 relates to a disc cartridge accommodating a recordable disc which may be used for recording and reproducing information signals.

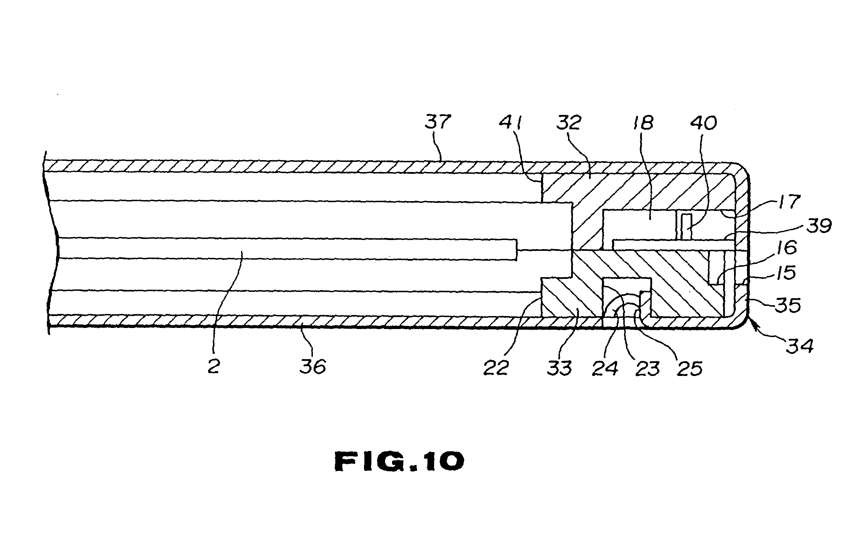

Referring to Figures 6 and 10, a disc cartridge comprises a cartridge main body 31, accommodating a recordable disc 2, and a shutter member 34 as later described. The recordable disc 2 is a so-called magneto-optical disc having a disc substrate formed of a light-transmitting synthetic resin material. The disc substrate has one of its major surfaces formed as a signal recording surface and the other major surface provided with a signal recording layer formed by deposition of a magnetic material. Information signals may be recorded on the signal recording layer of the recordable disc 2 by irradiating the signal recording layer with a converged laser beam through the disc substrate and applying a magnetic field, modulated in accordance with information signals recorded on the recordable disc 2, to the signal recording layer from the opposite major surface of the disc substrate. On the other hand, information signals may be read from the signal recording layer by irradiating the signal recording layer with a converged laser beam through the disc substrate from the signal recording surface. The recordable disc 2 may have a diameter of about 64 mm.

A centre hole 7 and a disc hub 6, by means of which a disc reproducing apparatus for recording and/or reproducing the information signals on or from the signal recording layer can hold the recordable disc 2, are provided at a central portion of the disc 2, as in the case of the read-only disc 1. A signal recording region is provided to extend from the outer perimeter of the centre hole 7 on the major surface as far as the outer rim of the disc substrate of the recordable disc 2.

The cartridge main body 31 comprises a thin rectangular casing to house the recordable disc 2 therein by abutting and securing an upper half 32 and a lower half 33 to each other, similarly to the cartridge main body 3 of the first embodiment. The cartridge main body 31 is substantially in the form of a square in which each side of upper and lower major surfaces adjacent to the major surfaces of the disc 2 is approximately 68 to 72 mm long which is slightly greater than the disc diameter. The recordable disc 2 is housed within the cartridge main body 31 with the signal reading major surface and the opposite major surface thereof facing the lower half 33 and the upper half 32, respectively.

The lower major surface of the cartridge main body 31 is provided with an aperture 22 for an optical pickup device.

The upper major surface of the cartridge main body 31 is formed with an aperture 41 for a magnetic head unit, not shown. The aperture 41 for the magnetic head unit is a substantially rectangular through-hole similar to the aperture 22 and is provided at a position facing the aperture 22 with the recordable disc 2 in-between. The aperture 41 for the magnetic head unit can expose to outside a part of the opposite major surface of the recordable disc 2 between its inner and outer peripheries. An external magnetic field can be applied to the signal recording layer via the aperture for the magnetic head unit of the disc recording and/or reproducing apparatus when recording information signals on the signal recording layer.

A substantially circular chucking aperture 8 is provided at the centre of the major surface of the lower half 5.

The shutter member 34 is mounted on the cartridge main body 31. The shutter member 34 can close the apertures 22 and 41 and comprises a first plate portion 36, associated with the aperture 22 for the optical pickup device, a second plate portion 37, associated with the aperture for the magnetic head unit 41, and a connecting portion 35 interconnecting the proximal ends of the plate portions 36, 37. The shutter member 34 is formed by bending a one-piece metal plate.

The connecting portion 35 is formed as a rectangular plate having a width substantially corresponding to the thickness of the cartridge main body 3. To close the apertures 22, 41 when required, the plate portions 36, 37 are formed as rectangular plates of a size slightly larger than these apertures and of a uniform thickness of about 0.3 mm. The plate portions 36, 37 face each other in parallel with a gap in-between substantially corresponding to the thickness of the cartridge main body 31.

The connecting portion 35 is extended in one longitudinal direction forming an extension 35a. The extension 35a is formed as a rectangular plate having a width one-half the thickness of the connecting portion 35, and extends in one lateral direction of the plate portions 36, 37. The second plate portion 36 has its end supported by the connecting portion 35 increased in width towards the connection with the connecting portion 35 and is joined to the extension 35a of the connecting portion 35.

The extension 35a has an inserting portion 38 which is perpendicular to the extension 35a and parallel to the plate portions 36, 37 so as to extend towards the free ends of the plate portions 36, 37 with a length shorter than the plate portions 36, 37. The inserting portion 38 is provided at a plane located halfway between the planes of the plate portions 36, 37. The inserting portion 38 is provided with a shutter opening lug 40 which is normal to the inserting portion 38 and parallel to the connecting portion 35 and which extends towards the second plate portion 37. The lug 40 has a height from the inserting portion 38 of about 1 to 2 mm and a width of about 4 mm. The inserting portion 38 has a locking notch 39 extending from the free end of the inserting portion 38 towards the connecting portion 35. The notch 39 may be formed at the time of segmenting the lug 40.

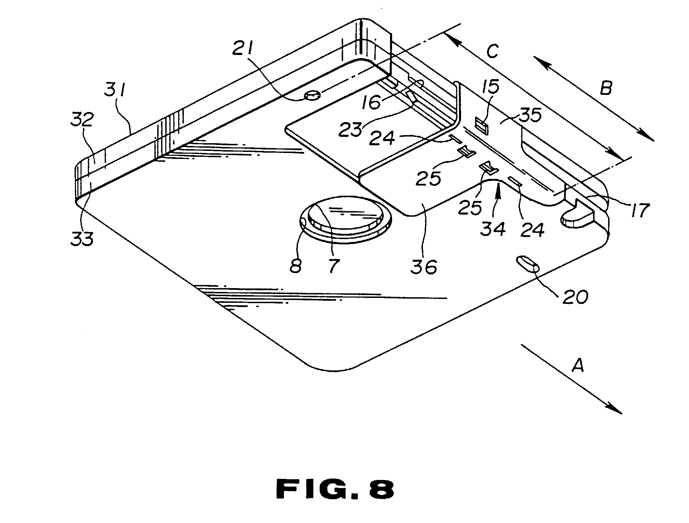

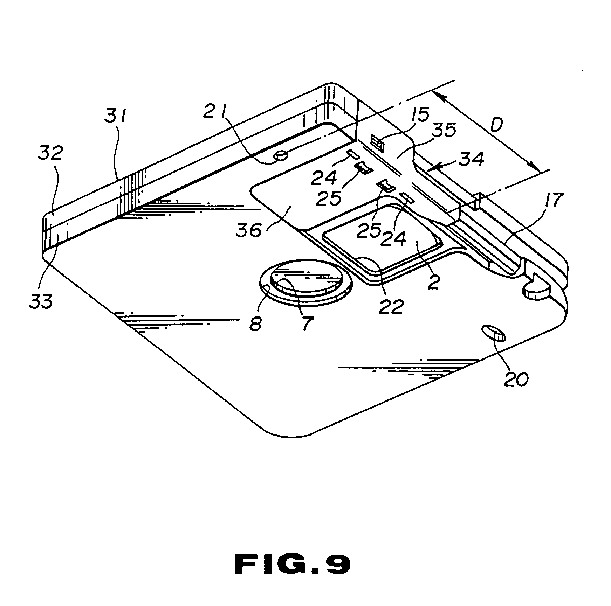

Referring particularly to Figures 8 and 9, engaging pawls 25, 25 and engaging projections 24, 24 to be engaged in a supporting grove 23 provided in the lower major surface of the cartridge main body 31, are formed towards the proximal side of the plate portion 36 which is increased in width. The supporting groove 23 is formed to extend along the lateral side of the lower half 33. The engaging pawls 25, 25 are formed by segmenting the first plate portion 36, while the engaging projections 24, 24 are formed by stamping a part of the first plate portion 36.

The shutter member 34 is supported by the cartridge main body 31 by engaging the engaging pawls 25, 25 and the engaging projections 24, 24 in the supporting groove 23 so that the connecting portion 35 substantially abuts against the lateral side of the cartridge main body 31 and so that the first and second plate portions 36, 37 extend along the lower and upper major surfaces of the cartridge main body 31. The inserting portion 38 is inserted at this time in a shutter opening groove 17 provided in one lateral side of the cartridge main body 31. The shutter opening groove 17 is provided along a lateral side wall of the cartridge main body 31 extending along the inserting direction A of the disc cartridge into the disc recording and/or reproducing apparatus, and is of a width corresponding to the height of the shutter opening lug 40. The shutter opening groove 17 is formed along the front side of the cartridge main body 31 in the inserting direction of the disc cartridge and is open towards the front side in the inserting direction. When the shutter member 34 is attached to the cartridge main body 31, the shutter opening lug 40 is inserted into the shutter opening groove 17.

Since the engaging pawls 25, 25 and the engaging projections 24, 24 are slidable along the supporting groove 23, the shutter member 34 can be moved along the sidewall of the cartridge main body 31 provided with the shutter opening groove 17, as shown by an arrow B in Figure 8, parallel to the inserting direction of the disc cartridge into the disc recording and/or reproducing apparatus as shown by an arrow A in Figures 6 to 8. Meanwhile, the extension 35a is provided to extend towards the apertures 22 and 41 when the apertures 22 and 41 are opened by the plate portions 36 and 37.

A locking member 18 with a locking section 19 is provided within the cartridge main body 31 as in the first embodiment. When the shutter member 34 is in the position of closing the apertures 22, 122, the locking section 19 engages in the locking notch 39 provided in the inserting portion 38 to lock the shutter member 34 in the aperture closing position.

The connecting portion 35 is formed with a shutter closing through-hole 15 into which a shutter closing pin, not shown, of the disc recording and/or reproducing apparatus is introduced to move the shutter member 34 towards the aperture closing position. An operating pin escape groove 16 is provided in register with the trajectory of the shutter closing through-hole 15 in the sidewall of the cartridge main body 31 provided with the shutter opening groove 17. The function of the escape groove 16 is to prevent the shutter closing pin introduced into the through-hole 15 from abutting against the cartridge main body 31.

With the above described disc cartridge, when the disc cartridge is not in use, the apertures 22, 41 are closed by the plate portions 36, 37 to prevent dust and dirt and fingers or the like from intruding via the apertures 22, 41 into the cartridge main body 31.

When in use, the disc cartridge is loaded in position on a cartridge loading section provided on a chassis of the disc recording and/or reproducing apparatus. The cartridge main body 31 is loaded in position on the cartridge loading section on the chassis by a plurality of positioning pins on the chassis being introduced into first and second positioning holes 21, 22 formed in the lower major surface of the cartridge main body 31. When a thrust pin, not shown, of the disc recording and/or reproducing apparatus, intrudes into the shutter opening groove 17, the locking member 18 is deformed resiliently towards the inner side of the cartridge main body 31 to release retention of the shutter member 34. The shutter opening lug 40 is thrust by the thrust pin to shift the shutter member 34 from the apertures closed position shown in Figure 8 to the apertures open position shown in Figure 9 thereby to open the apertures 22, 41. The recordable disc 2 is set and maintained on the disc table of the disc recording and/or reproducing apparatus by having a region around the centre hole 7 of one of the major surfaces thereof supported on the upper surface of the disc table. This enables information signals to be written or read on or from the disc 2 via the apertures 22, 41.

When the apertures 22, 41 are closed by the plate portions 36, 37 of the shutter member 34, the distance between the shutter opening lug 40 and the first positioning hole 21 is a first distance indicated by an arrow C in Figure 8, as in the case of the disc cartridge accommodating the read-only disc. Also, with the present disc cartridge, when the apertures 22, 41 are opened by the shutter member 34, the distance between the shutter opening lug 40 and the first positioning hole 21 is a second distance indicated by an arrow D in Figure 9.

With the present disc cartridge, since the shutter member 34 is slid by the thrust pin intruded into the shutter opening groove 17, the shutter member 34, when modified into a shape suited to be moulded integrally from a synthetic resin material, may be used in a disc recording and/or reproducing apparatus designed to be used in conjunction with a disc cartridge having the shutter member 34 formed of a metallic material.

The disc accommodated in the disc cartridge may be a magnetic disc, instead of a magneto-optical disc of the preceding embodiment.

With the above described second embodiment of disc cartridge of the invention, the connecting portion 35 of the shutter member 4, movably supported on a lateral side of the cartridge main body 31 accommodating the recordable disc 2, is provided with the extension 35a extended in the direction of movement of the shutter member 34, and the combined length of the extension 35a along the aforementioned lateral side of the cartridge main body 31 is longer than the width of the plate portions 36, 37 along the lateral side of the cartridge main body 31. The shutter member is supported by having the inserting portion 38 of the extension 35a introduced into the groove 17 formed in the lateral side of the cartridge main body 31.

The result is that, with the present disc cartridge, when the shutter member 34 is moved along the lateral side of the cartridge main body 31 under the effect of an operating pressure applied to the connecting portion 35, the shutter member 34 is prevented from being tilted relative to the movement direction thereof relative to the cartridge main body 31 due to the force of friction produced between the plate portions 36, 37 and the cartridge main body 31.

Since the length of the extension 35a along the aforementioned lateral side of the cartridge main body 31 is longer than the length of the plate portions 36, 37 along the lateral side of the cartridge main body 31, the plate portions 36, 37 may be easily processed into a flat shape, even if the shutter member 34 is produced by punching from a plate-shaped blank material.

In a third embodiment of disc cartridge, explained hereinbelow, a read-only disc 1 is accommodated in a cartridge main body 3, a shutter member is formed of a synthetic resin material and parts or components similar to those of the embodiment shown in Figures 1 to 4 are denoted by the same reference numerals, and the description common to that of the embodiment shown in Figures 1 to 4 is omitted for clarity.

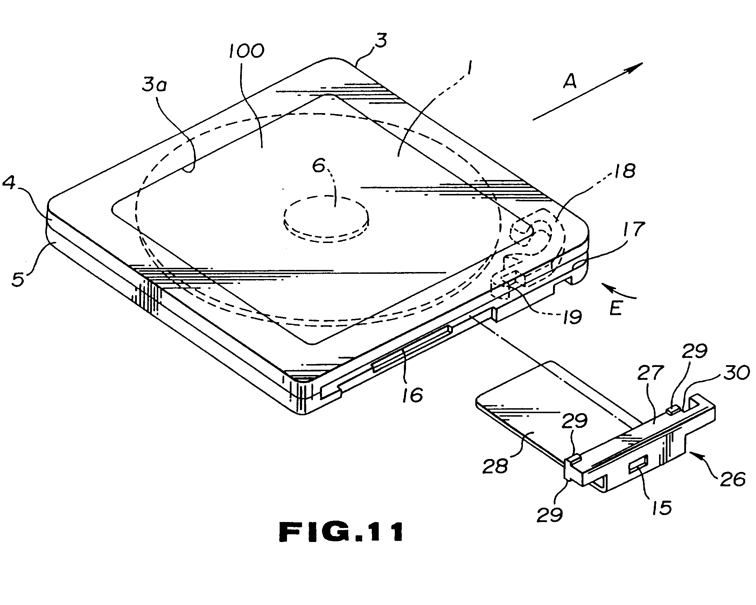

Referring to Figures 11 to 14, a shutter member 26 formed of a synthetic resin material is mounted on the cartridge main body 3, as shown in Figures 11 to 14. The function of the shutter member 26 is to open and close the aperture 22 for the optical pickup device. The shutter member 26 is provided with a slide portion 27 and a plate portion 28 upstanding from the slide portion 27, and is formed integrally from a synthetic material, such as polyacetal.

The plate portion 28 is in the form of a rectangle slightly larger in size than the aperture 22, that is, it has a longitudinal length of about 25 to 30 mm, for optionally closing the aperture 22. The slide portion 27 is in the form of an elongate bar of a size to intrude into the shutter opening groove 17 of the cartridge main body 3, and has a length longer than the width of the plate portion 28. One end of the plate portion 28 is supported by one major surface of the slide portion 27.

The upper and lower major surfaces of the slide portion 27 are integrally formed with engaging lugs 29, 29 to be engaged in the shutter opening groove 17. The slide portion 27 is formed with a retention notch 30 at a position corresponding to the notch 14 of the first embodiment.

The shutter member 26 is supported by the cartridge main body, with a proximal end of the plate portion 28 sliding against the one lateral side of the cartridge main body 3, by having the slide portion 27 introduced into the shutter opening groove 17 and by having the engaging projections 29, 29 engaged in the shutter opening groove 17.

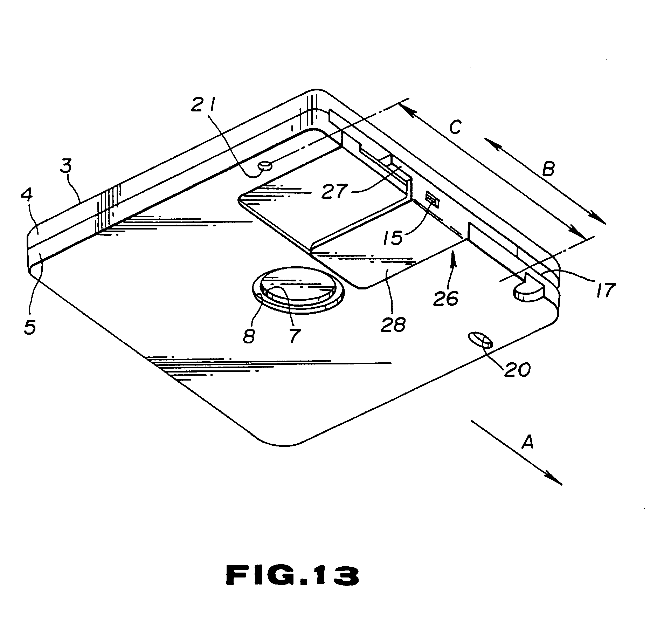

The shutter member 26 may be moved along one lateral side of the cartridge main body 3, as shown by arrow B in Figure 13, by the engaging projections 29, 29 being slid along the shutter opening groove 17, so that the plate portion 28 is slid along the lower major surface of the cartridge main body 3. When the shutter member 26 is moved relative to the cartridge main body 3, the plate portion 28 is moved between the position of closing the aperture 22 for the optical pickup device and the position of opening the aperture 22 for the optical pickup device.

Similarly to the preceding embodiments, a locking member 18 is provided in the cartridge main body 3 for locking the shutter member 26 in the position of closing the aperture 22 for the optical pickup device by the plate portion 28 as shown in Figure 3.

The locking member 18 has its locking section 19 engaged in the notch 30 of the shutter member 26 when the plate portion 28 of the shutter member 26 is in the position of closing the aperture 22 for the optical pickup device. That is, the locking member 18 is thrust via the shutter opening groove 17 by a thrust pin, not shown, of disc reproducing apparatus, so that it is resiliently deformed towards the inner side of the cartridge main body 3, as shown by an arrow E in Figure 11, to release retention of the shutter member 26 by the locking member 18.

The shutter closing through-hole 15 formed in a proximal region of the plate portion 28 in the vicinity of the slide portion 27 is engaged by an engaging pin, not shown, during the closing operation of the shutter member 26 by the disc reproducing apparatus, to shift the shutter member 26 in the closing direction relative to the cartridge main body 3. The shutter closing pin escape groove 16 is formed in the sidewall of the cartridge main body 3 having the shutter opening groove 17 or extending along the shutter opening groove 17.

With the above described disc cartridge, when the disc cartridge is not in use, the shutter member 26 closes the aperture 22 for the optical pickup device by its plate portion 28 to prevent intrusion of dust and dirt or fingers via the aperture 22 into the inside of the cartridge main body 3.

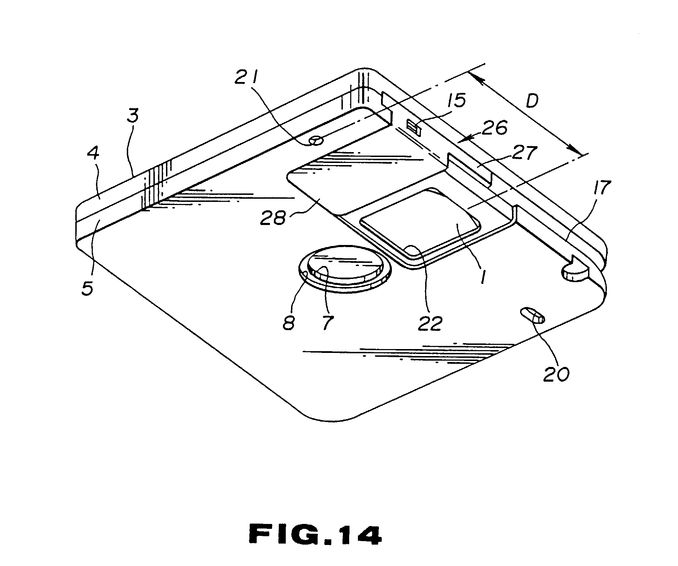

When in use, the disc cartridge is loaded on the chassis of the disc recording and/or reproducing apparatus. The cartridge main body 3 is loaded in position on the chassis by having a plurality of positioning pins on the chassis intruded into the first and second positioning holes 21, 20. Also, the thrust pin, not shown, of the disc reproducing apparatus intrudes into the shutter opening groove 17 resilient to deform the locking member 18 within the cartridge main body 3 to release retention of the shutter member 26. Also, the one end of the slide portion 27 is thrust by the thrust pin to slide the shutter member 26 from the closed position shown in Figure 13 to the open position shown in Figure 14 to open the aperture 22 for the optical pickup device. This enables information signals to be read from the read-only disc 1 via the aperture 22 for the optical pickup device.

When the aperture 22 for the optical pickup device is closed by the plate portion 28 of the shutter member 26, the distance between one end of the slide portion 27 and the first positioning hole 21 is a first distance indicated by an arrow C in Figure 13. When the aperture 22 for the optical pickup device is opened by the shutter member 26, the distance between the one end of the slide portion 27 and the first positioning hole 21 is a second distance indicated by an arrow D in Figure 14.

Since the shutter member 26 is slid by the thrust pin intruded into the shutter opening groove 17, the shutter member 9, when modified into a shape suited to be bent from one-piece of metallic sheet material, may be used in a disc reproducing apparatus to be used in conjunction with a disc cartridge having the shutter member 9 formed of a synthetic resin material.

The read-only disc 1 can be set and maintained in position on the disc table of the disc recording and/or reproducing apparatus.

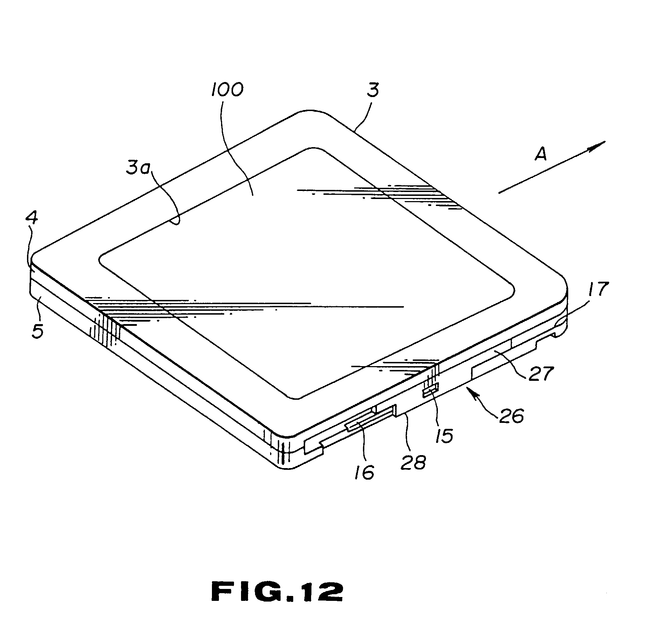

The shutter member 26 does not extend over the upper major surface of the cartridge main body 3, as shown in Figure 12. Thus the upper major surface of the cartridge main body 3 in its entirety may be utilised for inscription, printing or affixture of a label 100 for indicating the contents of the information signals recorded on the read-only disc 1.

Since it suffices for the present disc cartridge to be provided with only one plate portion 28 of the shutter member 26 associated with the aperture 22 for the optical pickup device, the disc cartridge may be reduced in size so that the cartridge main body 3 itself may be reduced in size.

A disc cartridge according to a fourth embodiment has a cartridge main body 31 which accommodates a recordable disc 2 and is provided with a shutter member formed of a synthetic resin material and parts or components similar to those of the embodiment shown in Figures 6 to 9 are denoted by the same reference numerals so description common to that of the embodiment shown in Figures 6 to 9 is omitted for clarity.

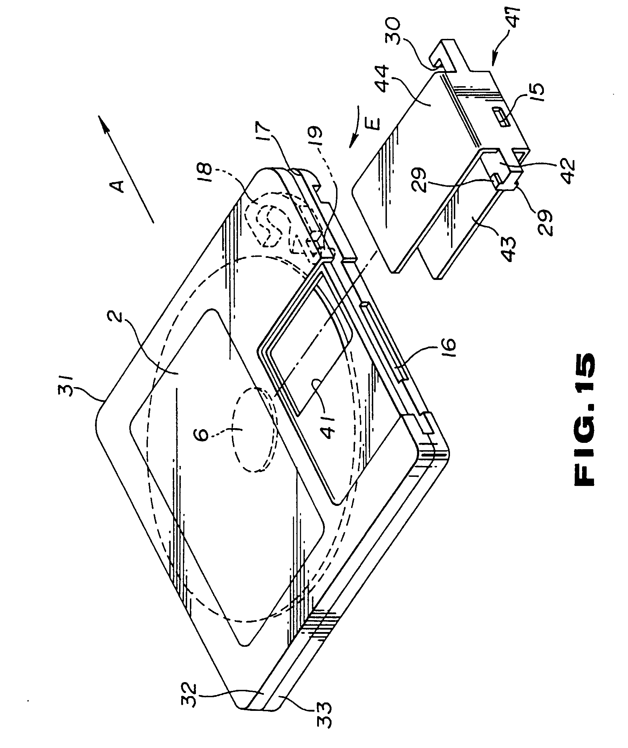

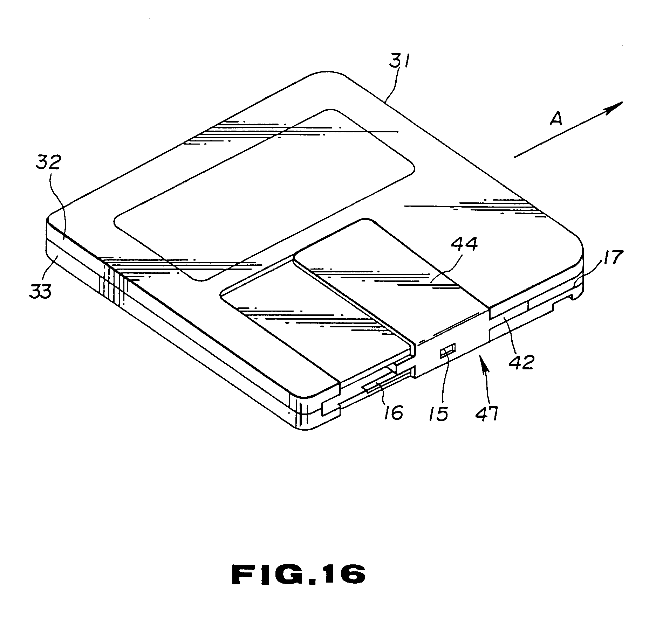

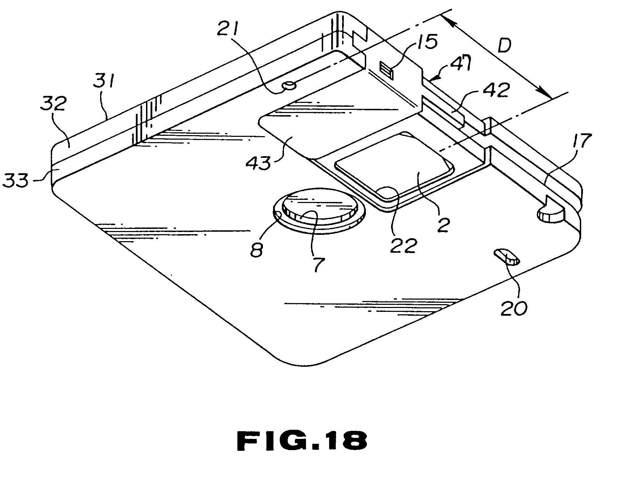

Referring to Figures 15 and 18 a shutter member 47 of a synthetic resin material is provided on the cartridge main body 31 of the disc cartridge to open or close the aperture 22 for the optical pickup device and an aperture 41 for a magnetic head unit. Referring to Figures 15 to 18, the shutter member 47 is provided with a first plate portion 43, associated with the aperture 22 for the optical pickup device, a second plate portion 44, associated with the aperture 41 for the magnetic head unit and a slide portion 42 to support the proximal ends of the first and second plate portions 43, 44. It is integrally formed of a synthetic resin material, such as polyacetal.

The slide portion 42 is formed as an elongate rectangular bar of a size that can be inserted into the shutter opening groove 17 of the cartridge main body 31. For closing the apertures 22, 41 when required, the plate portions 43, 44 are formed as rectangular plates of a size slightly larger than these apertures and of a uniform thickness of about 0.3mm. The plate portions 43, 44 face each other in parallel with a gap in-between substantially corresponding to the thickness of the cartridge main body 31.

The slide portion 42 is of a length longer than the width of the plate portions 43, 44. That is, both ends of the slide portion 42 extend beyond the respective lateral sides of the plate portions 43, 44. The slide portion 42 is provided with the retention notch 30 and the engaging lugs 29, 29 on both sides thereof, as in the shutter member 26 of the preceding embodiment.

The shutter member 47 is supported by the cartridge main body 31, with the proximal sides of the plate portions 43, 44 substantially abutted against the lateral side of the cartridge main body 31, by having the slide portion 42 inserted into the shutter opening groove 17 and by having the engaging lugs 29, 29 engaged in the shutter opening groove 17. The shutter member 47 is supported by the cartridge main body 31 with the first plate portion 43 extending along the lower major surface of the cartridge main body 31 and with the second plate portion 44 extending along the upper major surface of the cartridge main body 31.

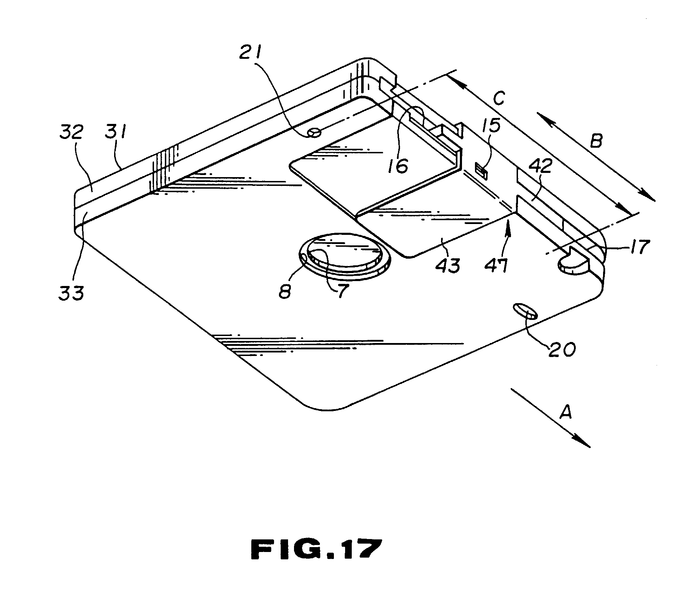

With the engaging lugs 29, 29 being slidable along the shutter opening groove 17, the shutter member 41 may be moved along the shutter opening groove 17 along one lateral side of the cartridge main body 31, as shown by arrow B in Figure 17. With the shutter member 41 being moved relative to the cartridge main body 31, the first plate portion 43 is moved between a position of closing the aperture 22 for the optical pickup device as shown in Figure 17 and a position of opening the aperture for the optical pickup device 22 as shown in Figure 18. Similarly to the first plate portion 43, with the shutter member 47 being moved relative to the cartridge main body 31, the second plate portion 44 is moved between a position of closing the aperture 41 for the magnetic head unit and a position of opening the aperture 41 for the magnetic head unit. The direction of movement of the shutter member 41 is parallel to the direction of insertion of the disc cartridge into the disc recording and/or reproducing apparatus as shown by an arrow A in Figures 15 to 17.

When the shutter member 41 is at the position of closing the apertures 22, 122, the locking section 19 of the locking member 18 provided in the cartridge main body 31 is engaged in the notch 30, under the resiliency of the locking member 18, to lock the shutter member 41 in the aperture closing position.

The shutter closing through-hole 15 is provided in the proximal side of the first plate portion 43.

When the disc cartridge is not in use, the shutter member 47 closes the aperture 22 for the optical pickup device and the aperture 41 for the magnetic head unit by its plate portions 43, 44 to prevent intrusion of dust and dirt or fingers via the apertures 22, 41 into the inside of the cartridge main body 31.

When in use, the disc cartridge is loaded on the chassis of disc recording and/or reproducing apparatus. The cartridge main body 31 is loaded in position on the chassis by having a plurality of positioning pins of a cartridge loading section on a chassis intruded into the first and second positioning holes 21, 20. Also, the thrust pin, not shown, of the disc reproducing apparatus intrudes into the shutter opening groove 17 resiliently to deform the locking member 18 within the inside of the cartridge main body 3 to release retention of the shutter member 47 by the locking member 18. Also, one end of the slide portion 42 is thrust by the thrust pin to slide the shutter member 41 from the closing position shown in Figure 17 to the opening position shown in Figure 18 to open the apertures 22, 41. The recordable disc 2 is set and maintained on the disc table of the disc recording and/or reproducing apparatus with a region of one of the major surfaces of the disc around the centre hole 7 resting on the upper surface of the disc table. This enables the information signals to be read from the read-only disc 1 via the aperture 22 for the optical pickup device.

When the apertures 22, 41 are closed by the plate portions 43, 44 of the shutter member 41, the distance between one end of the slide portion 42 and the first positioning hole 21 is a first distance indicated by an arrow C in Figure 17, as in the disc cartridges of the preceding embodiments. Also, with the present disc cartridge, when the apertures 22, 41 are opened by the shutter member 47, the distance between the one end of the slide portion 42 and the first positioning hole 21 is a second distance indicated by an arrow D in Figure 18, as in the disc cartridges of the preceding embodiments.

With the present disc cartridge, since the shutter member 41 is slid by the thrust pin intruded into the shutter opening groove 17, the shutter member 9, when modified into a shape suited to be bent integrally from a one-piece metal sheet, may be used in a disc reproducing apparatus designed to be used in conjunction with a disc cartridge having the shutter member 9 formed of a synthetic resin material.

The disc accommodated in the disc cartridge of the present embodiment may be a magnetic disc instead of a magneto-optical disc.

When the shutter member is formed by bending a piece of sheet metal material, and the shutter member is changed to a shape suited to integral moulding from a synthetic resin material, the shutter member may still be used in a disc recording and/or reproducing apparatus designed to be used with a disc cartridge associated with a shutter member made from the metallic plate material.

Also, with the above described disc cartridge, when the shutter member is formed by integrally moulding a synthetic resin material, and the shutter member is changed to a shape suited to bending from a one-piece metal plate or sheet, the shutter member may still be used in a disc recording and/or reproducing apparatus designed to be used with a disc cartridge associated with a shutter member made from synthetic resin material.

Attention is directed to application 92301827.9(0 502 702) from which this application was divided out.

## Claims

1. A disc cartridge comprising:
a cartridge main body (3, 31) accommodating a disc (2) and having an aperture (22, 41) in at least one major surface thereof to expose a portion of a major surface of the disc to outside across an inner periphery and an outer periphery of the disc;
a shutter member (9, 34, 36, 37) movable along a lateral side of the cartridge main body (3, 31) to open or close the aperture (22, 41), said shutter member being supported by the cartridge main body; and
a holding member (18) having a proximal end supported within the cartridge main body for rotation about the proximal end, the holding member (18) being effective to hold the shutter member in a position of closing the aperture;
characterised by:
a shutter opening groove (17) provided in the lateral side of the cartridge main body (3, 31) in parallel to the inserting direction (A) of the cartridge main body; and
an escape part (16) formed in and extending along a portion of the lateral side of the cartridge main body (3, 31) provided with the shutter opening groove (17), said escape part being provided to prevent a shutter closing member from abutting with the lateral side of the cartridge main body when the shutter member is moved by the shutter closing member to close the aperture.

2. A disc cartridge according to claim 1, wherein the shutter opening groove (17) is open at a forward end in the inserting direction.

3. A disc cartridge according to claim 1 or claim 2, wherein the escape part (16) is provided at a position in the shutter opening groove (17) to which the shutter (9, 34, 36, 37) is moved to open the aperture (22, 41).

4. A disc cartridge according to any preceding claim, wherein the shutter member is provided with an opening (15) that is capable of cooperating with the shutter closing member to cause the shutter member to close the aperture (22,41).

## Patentansprüche

1. Plattenkassette, mit:
einem Kassettenhauptkörper (3, 31), der eine Platte (2) aufnimmt und eine Öffnung (22, 41) in zumindest einer seiner Hauptflächen aufweist, um einen Abschnitt einer Hauptfläche der Platte zwischen einem Innenrand und einem Außenrand der Platte nach außen freizugeben,
einem Schließelement (9, 34, 36, 37), das entlang einer lateralen Seite des Kassettenhauptkörpers (3, 31) bewegbar ist, um die Öffnung (22, 41) zu öffnen oder zu schließen, wobei das Verschlußelement von dem Kassettenhauptkörper getragen ist, und einem Halteelement (18) mit einem nahen Ende, das zum Schwenken um das nahe Ende in dem Kassettenhauptkörper getragen ist, wobei das Haltelement (18) das Verschlußelement in einer Position zum Schließen der Öffnung hält,
**gekennzeichnet** durch eine Verschlußelement-Öffnungsvertiefung (17), die in der lateralen Seite des Kassettenhauptkörpers (3, 31) parallel zur Einführrichtung (A) des Kassettenhauptkörpers vorgesehen ist, und
einem Ausweichelement (16), das ausgebildet ist und sich erstreckt entlang einem mit der Verschlußelement-Öffnungsvertiefung (17) ausgestatteten Abschnitt der lateralen Seite des Kassettenhauptkörpers (3, 31), wobei das Ausweichelement vorgesehen ist, um zu verhindern, daß ein Verschlußelement-Schließteil gegen die laterale Seite des Kassettenhauptkörpers stößt, wenn das Verschlußelement von dem Verschlußelement-Schließteil zum Verschließen der Öffnung bewegt wird.

2. Plattenkassette gemäß Anspruch 1, wobei die Verschlußelement-Öffnungsvertiefung (17) an einem vorderen Ende in der Einführrichtung offen ist.

3. Plattenkassette gemäß Anspruch 1 oder Anspruch 2, wobei das Ausweichelement (16) an einer Position in der Verschlußelement-Öffnungsvertiefung (17) vorgesehen ist, in die das Verschlußelement (9, 34, 36, 37) zum Öffnen der Öffnung (22, 41) bewegt wird.

4. Plattenkassette gemäß einem der vorhergehenden Ansprüche, wobei das Verschlußelement mit einer Öffnung (15) versehen ist, das mit dem Verschlußelement-Schließteil dergestalt zusammenwirken kann, daß das Verschlußelement veranlaßt wird, die Öffnung (22, 41) zu schließen.

## Revendications

1. Cartouche de disque comprenant :
un corps principal (3, 31) de cartouche logeant un disque (2) et comportant une ouverture (22, 41) dans au moins l'une de ses grandes faces pour rendre accessible de l'extérieur une partie d'une grande face du disque entre une périphérie intérieure et une périphérie extérieure du disque ;
un élément obturateur (9, 34, 36, 37) mobile le long d'un côté latéral du corps principal (3, 31) de cartouche pour ouvrir et fermer l'ouverture (22, 41), ledit élément obturateur étant supporté par le corps principal de cartouche ; et
un élément de maintien (18) ayant une extrémité proximale supportée à l'intérieur du corps principal de cartouche pour rotation autour de l'extrémité proximale, l'élément de maintien (18) servant à maintenir l'élément obturateur dans une position de fermeture de l'ouverture ;
caractérisé :
par une rainure (17) d'ouverture d'obturateur prévue dans le côté latéral du corps principal (3, 31) de cartouche parallèlement à la direction (A) d'introduction du corps principal de cartouche ; et
par une partie d'échappement (16) formée dans et s'étendant le long d'une portion du côté latéral du corps principal (3, 31) de cartouche pourvu de la rainure (17) d'ouverture d'obturateur, ladite partie d'échappement étant prévue pour empêcher un élément de fermeture d'obturateur de buter contre le côté latéral du corps principal de cartouche lorsque l'élément de fermeture d'obturateur déplace l'élément obturateur pour clore l'ouverture.

2. Cartouche de disque selon la revendication 1, dans laquelle la rainure (17) d'ouverture d'obturateur débouche à une extrémité avant dans le sens d'introduction.

3. Cartouche selon la revendication 1 ou la revendication 2, dans laquelle la partie (16) d'échappement est prévue à une position dans la rainure (17) d'ouverture d'obturateur à laquelle l'obturateur (9, 34, 36, 37) est amené pour ouvrir l'ouverture (22, 41).

4. Cartouche selon l'une quelconque des revendications précédentes, dans laquelle l'élément obturateur est pourvu d'une ouverture (15) qui est capable de coopérer avec l'élément de fermeture d'obturateur pour faire que l'élément obturateur ferme l'ouverture (22, 41).
